Europäisches Patentamt

European Patent Office

Office européen des brevets

Veröffentlichungsnummer: **0 534 986 B1**

# EUROPÄISCHE PATENTSCHRIFT

Veröffentlichungstag der Patentschrift: **15.11.95**

Int. Cl.⁶: **B60T 8/00**

Anmeldenummer: **91908660.3**

Anmeldetag: **26.04.91**

Internationale Anmeldenummer:
**PCT/EP91/00810**

Internationale Veröffentlichungsnummer:
**WO 92/19477 (12.11.92 92/28)**

## ANTIBLOCKIERREGELSYSTEM.

Veröffentlichungstag der Anmeldung:
**07.04.93 Patentblatt 93/14**

Bekanntmachung des Hinweises auf die
Patenterteilung:
**15.11.95 Patentblatt 95/46**

Benannte Vertragsstaaten:
**DE FR GB**

Entgegenhaltungen:
**EP-A- 0 381 957**
**DE-A- 3 720 172**
**DE-A- 4 012 167**
**FR-A- 2 647 403**
**GB-A- 2 217 479**

Patentinhaber: **ROBERT BOSCH GMBH**
**Postfach 30 02 20**
**D-70442 Stuttgart (DE)**

Erfinder: **KORASIAK, Wolfgang**
**Brombergerstrasse 29**
**D-7120 Bietigheim (DE)**
Erfinder: **MÜLLER, Elmar**
**Bergweg 32**
**D-7145 Markgröningen (DE)**
Erfinder: **BRACHERT, Jost**
**Gottfried Keller-Strasse 39**
**D-7257 Ditzingen (DE)**
Erfinder: **HERZMANSKY, Karl-Heinz**
**Dresdener Strasse 6**
**D-7141 Schwieberdingen (DE)**

EP 0 534 986 B1

**Beschreibung**

Stand der Technik

Ein Antiblockierregelsystem mit den Merkmalen des Oberbegriffs des Anspruch 1 ist aus der DE-PS-2555 403 bekannt. Dort wird in Druckabbauphasen ein Bremsdrucksignal exponentiell vermindert und in Druckaufbauphasen exponentiell erhöht. Das gewonnene Drucksignal kann zur Verbesserung der Regelung genutzt werden, wie z.B. in der genannten Patentschrift oder z.B. auch zur Giermomentenreduzierung, wozu die berechneten Vorderraddrücke miteinander verglichen werden.

Vorteile der Erfindung

Ein Vergleich der gemäß dem Anspruch 1 gewonnenen Drucksignale mit den gemessenen Druckwerten zeigt, daß eine sehr gute Annäherung der gemäß dem Anspruch 1 gewonnenen Drucksignale an die tatsächlichen Druckwerte erzielt wird.

Der fahrzeugspezifische Zusammenhang zwischen den Druckwerten und den Fahrzeugverzögerungswerten sowohl für die Ermittlung der Ausgangswerte $p_v$(to) und $p_R$(to) als auch für die Ermittlung des mittleren Blockierdrucks werden empirisch ermittelt und abgespeichert.

Figurenbeschreibung

Anhand der Zeichnung wird ein Ausführungsbeispiel der Erfindung erläutert.
Es zeigen
    Fig. 1      ein Blockschaltbild eines Antiblockierreglers
    Fig. 2      ein Blockschaltbild für die erfindungsgemäße Bestimmung des Bremsdrucks
    Fig. 3      Diagramme zur Erläuterung

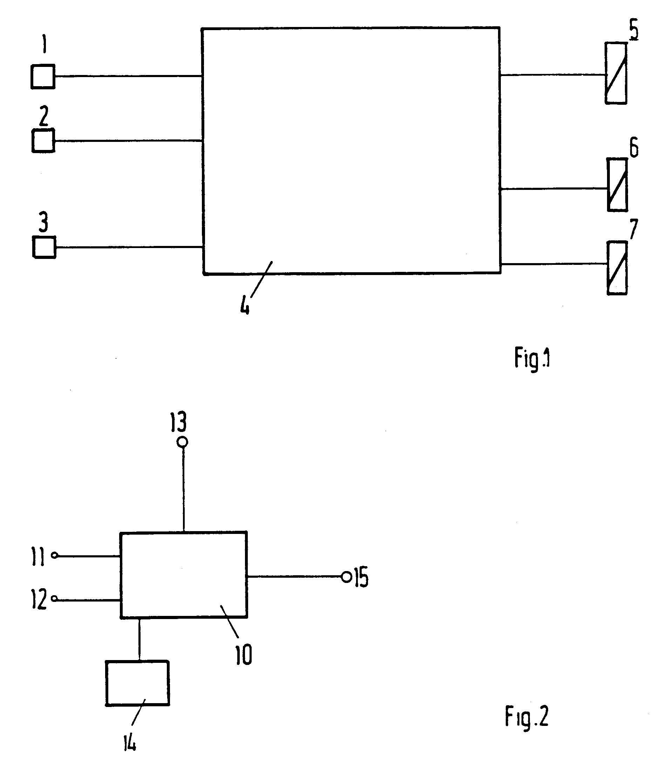

Fig. 1 zeigt ein Antiblockierregelsystem enthaltend Meßwertgeber 1 - 3 für die Geschwindigkeit der Fahrzeugräder, eine Auswerteschaltung 4 zum Erzeugen von Bremsdrucksteuersignalen und Bremsdrucksteuerventile 5 bis 7 zur Variation des Bremsdrucks in Abhängigkeit von Radbewegungsverhalten.

Teil der Auswerteschaltung 4 ist eine Einrichtung zur Bestimmung der Radbremszylinderdrücke, vorzugsweise der beiden Vorderräder. Der ermittelte Druck kann wie oben bereits beschrieben genutzt werden.

Fig. 2 zeigt den Teil der Auswerteschaltung, der den Bremsdruck aus der Länge der Bremsdrucksteuersignale, aus gespeicherten Werten und Verläufen und unter Zuhilfenahme der Fahrzeugverzögerung, die aus der Steigung der Referenzgeschwindigkeit gewonnen werden kann, ermittelt. Hierzu ist ein Rechner 10 vorgesehen, dem über die Klemmen 11 und 12 die Ventilansteuersignale für die beiden Vorderräder zugeführt werden. Die Signale für den Druckaufbau und den Druckabbau unterscheiden sich im Vorzeichen. In einem Speicher 14 ist der für das gegebene Fahrzeug gültige Zusammenhang Bremsdruck/Fahrzeugverzögerung abgespeichert. Über eine Klemme 13 wird die in der Auswerteschaltung 4 ermittelte Fahrzeugverzögerung zugeführt. Über eine Klemme 15 wird dann das ermittelte Bremsdrucksignal an die Auswerteschaltung zur Verwertung abgegeben.

Im Rechner 10 laufen folgende Vorgänge ab.

Ausgangspunkt der Berechnung ist der Druck am Anfang einer Phase ($p_{rad}(t_o)$). In einer Aufbauphase ist $p_{rad}(t_o)$ gleich $p_k$ (Druck beim Wechsel von Abbau- zu Aufbauphase). In einer Abbauphase ist $p_{rad}(t_o)$ gleich dem Blockierdruck ($p_s$).

Zum Beginn der Regelung (Zeitpunkt ($t_o$) des ersten Druckabbaus) werden die Raddrücke aus der Fahrzeugverzögerung des ABS-Reglers geschätz. Dazu wurde durch Messungen der Zusammenhang zwischen dem mittleren Blockierdruck an der Vorderachse und der Fahrzeugverzögerung $a_{FZ}$ ermittelt und im Speicher 14 gespeichert. Es ergab sich folgender linearer Zusammenhang.

$$p_R = b \cdot a_{Fz}, \text{ wobei b eine Konstante ist.}$$

Für ein bestimmtes Fahrzeug war b = 10. Der Vordruck ($p_V$) wird ebenfalls aus der Fahrzeugverzögerung und Konstanten Werten c und e gewonnen

$$p_V = c \cdot a_{Fz} + e$$

$p_s$ und $p_k$ werden gleich $p_R(t_o)$ gesetzt.

2

EP 0 534 986 B1

Mit den so ermittelten Werten $p_R(t_o)$ und $p_V(t_o)$ kann jeweils nach den Zeitpunkten $t_o$ am Abbauanfang bzw. am Aufbauanfang der augenblickliche Druck im einzelnen Radbremszylinder ermittelt werden gemäß:

$$p_R(t) = p_R(t_o) - p_R(t_o) \cdot [1-e^{-(t-t_o)/T_1}]$$

für den Druckabbau, wobei $(t - t_o)$ sich aus den Ansteuersignalen ergibt bzw.

$$p_R(t) = p_R(t_o) + \{p_{vor}(t_o) - p_R(t_o)\} \cdot [1-e^{-(t - t_o)/T_2}]$$

für den Druckaufbau

Die Zeitkonstanten $T_2$ bzw. $T_1$ sind für den Auf- und Abbau unterschiedlich groß. Für die Druckberechnung wird der Regelvorgang in Abbauphasen und Aufbauphasen eingeteilt. Eine Abbauphase beginnt beim ersten Druckabbau nach einer Aufbauphase und endet beim nächsten Aufbau. Entsprechend beginnt eine Aufbauphase beim ersten Druckaufbau nach einer Abbauphase und endet beim nächsten Druckabbau. Die Berechnung des Drucks wird jeweils vom Beginn der momentanen Phase ($t_o$) bis zum aktuellen Zeitpunkt ($t$) vorgenommen, indem die Auf- bzw. Abbauzeiten, (Impulse) seit dem Beginn der Phase addiert werden.

Da der Druckverlauf im Radbremszylinder durch ein Verzögerungsglied erster Ordnung nachgebildet ist, wird die Druck-Volumen-Kennlinie der Radbremszylinder vernachlässigt. Dies spielt besonders bei niedrigen Drücken eine Rolle. Kleine Drücke können durch diese Vereinfachung zu hoch berechnet werden. Dies wird bei einer weiteren Verwendung der Druckwerte (z.B. bei der Druckkorrektur) berücksichtigt.

Die errechneten Druckwerte werden durch ein Hydraulikmodell simuliert und hängen außer von den Ventilsignalen von den berechneten Anfangswerten ab. Eine Korrektur der Bremsdrücke im Verlauf der Regelung ist möglich.

Für die Radbremsdruckkorrektur werden die Blockierdrücke der Vorderachse herangezogen. Aus diesem Grund wird die Korrektur immer dann vorgenommen wenn ein Rad instabil wird und damit ein neuer Blockierdruckwert vorliegt (Beginn einer Abbauphase). Das mittlere Blockierdruckniveau an der Vorderachse wird mit dem aus der Fahrzeugverzögerung ermittelten Druckwert verglichen. Falls dieses mittlere Blockierdruckniveau im Verhältnis zur Fahrzeugverzögerung zu gering bzw. zu hoch berechnet wurde, werden die Raddrücke gemeinsam um einen bestimmten Faktor nach oben bzw. nach unten korrigiert. Das mittlere Blockierdruckniveau wird durch Mittelung der Blockierdrücke an der Vorderachse gewonnen. Da bei der Druckberechnung infolge Vernachlässigung der Druck-Volumen-Kennlinie der Radbremszylinder kleine Drücke zu hoch berechnet werden, werden geringe Drücke bei der Mittelung stärker gewichtet.

Durch Messungen wurde ein fahrzeugspezifischer Zusammenhang zwischen mittlerem Blockierdruck und Fahrzeugverzögerung ermittelt (in 14 abgelegt). Dieser Zusammenhang ist in Form einer Geradengleichung darstellbar. Aus dieser Gleichung kann nun der zu einer bestimmten Fahrzeugverzögerung gehörende mittlere Blockierdruck berechnet werden:

$$p_R^* = b \cdot a_{Fz}$$

Aus dem Vergleich mit dem berechneten mittleren Blockierdruck (pm) ergibt sich der Korrekturfaktor:

$$k = \frac{p_R^*}{p_m}$$

Mit diesem Faktor werden nun die Radbremsdrücke korrigiert:

$$p_{Rneu} = p_{Ralt} \cdot k$$

Da der Blockierdruck $p_s$ Einfluß auf die weitere Druckberechnung und -korrektur hat, muß er ebenfalls mit obiger Formel korrigiert werden.

Bei einem Reibwertsprung in Richtung auf einen höheren Reibwert muß die Korrektur für eine bestimmte Zeitspanne ausgesetzt werden, bedingt durch die Filterung der Fahrzeugverzögerung, der Zusammenhang zwischen Fahrzeugverzögerung und Bremsdruck erst nach Ablauf der Filterzeit wieder

3

EP 0 534 986 B1

gegeben ist. Während dieser Zeit würde der Bremsdruck zu weit nach unten korrigiert werden. Der $\mu$-Sprung wird erkannt, in dem die Gesamtaufbauzeit bis zum Erreichen einer Instabilität an einem Rad gemessen wird. Wenn diese Zeit eine gewisse Schwelle überschreitet, wird die Korrektur für die Filterzeit unterbrochen.

Bei einem Reibwertsprung in die andere Richtung (high nach low) muß eine entsprechende Maßnahme erfolgen.

Falls in einer Aufbauphase der Radbremsdruck korrigiert wurde, muß auch der Vordruck korrigiert werden. Dazu wird die Druckberechnungsformel nach $p_V$ aufgelöst:

$$P_{Vneu} = \frac{p_R(t) - p_R(t_o)}{1-e^{-(t-t_o)/T}} + p_R(t_o)$$

$p_{rad}(t_o)$ ist in diesem Fall gleich $p_k$:

$$P_{Vneu} = \frac{p_R(t) - p_k}{1-e^{-(t-t_o)/T}k} + p_k$$

Vor allem bei sehr kleinen Drücken kann der Vordruck großen Schwankungen unterworfen sein. Aus diesem Grund muß der Vordruck gefiltert werden. Im vorliegenden Fall wurde dies dadurch erreicht, daß eine durch die Korrekturformel ermittelte Änderung des Vordrucks nur zu einem bestimmten Anteil (z.B. 0.75) zugelassen wird:

$$P_{vor}^{neu} = P_{vor}^{alt} + (\frac{p_R(t) - pk}{1-e^{-(t-t_o)/T}} + pk - P_{vor}^{alt}) \cdot f$$

Zusätzlich wird der Vordruck nach oben begrenzt.

Nach der Neuberechnung des Vordrucks wird die Druckberechnung neu initialisiert. $p_k$ wird gleich $p_R$ gesetzt, d.h. es beginnt eine neue Aufbauphase.

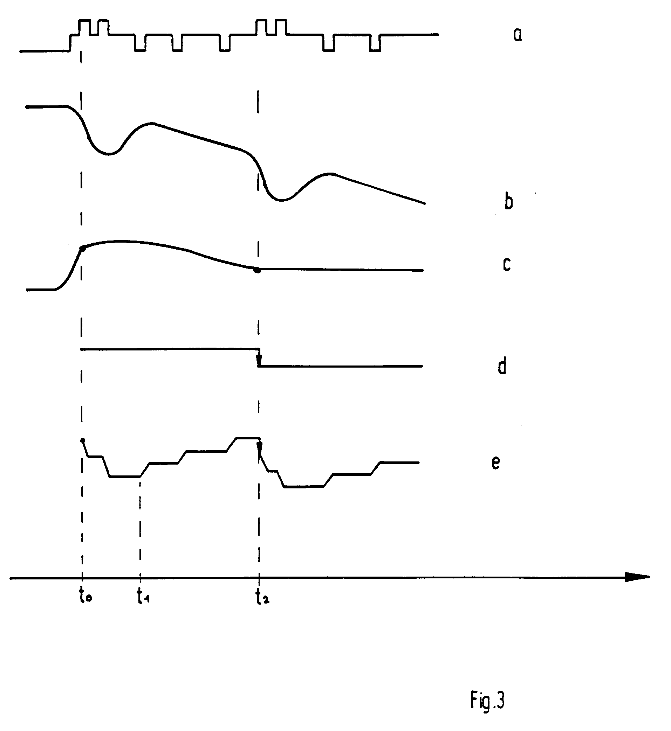

Fig. 3a zeigt ein Ventilsignalzug (Pulse nach oben: Abbau; Pulse nach unten Aufbau) während einer Regelung. In Fig. 3b ist der Geschwindigkeitsverlauf des zugehörigen Rads gezeigt. Es folgt in Fig. 3c der Fahrzeugverzögerungsverlauf. Aus 3d ist der Verlauf des Vordrucks und aus 3e der gepulste Verlauf des Radzylinderdrucks zu entnehmen.

Zum Zeitpunkt $t_o$ (siehe Zeichnung) setzt der gepulste Druckabbau ein. Hier wird die Fahrzeugverzögerung bestimmt, aus der sich die Anfangswerte $p_V(t_o)$ und $p_R(t_o)$ ergeben. Zum Zeitpunkt $t_1$ werden die Anfangswerte $p_V(t_o)$ bzw. $p_R(t_o)$ erneut ermittelt und nachfolgend der Bremsdruckverlauf $p_R(t)$ ermittelt. Vom Zeitpunkt $t_1$ an wird von dem bei $t_o$ ermittelten Druckwert $p_V(t_o)$ und dem zuletzt errechneten Druckwert $p_R(t)$ ausgehend der neue Radbremsdruckverlauf $p_R(t)$ berechnet.

Bei $t_2$, d.h. zum Zeitpunkt des Auslösens eines neuen Regelzyklus wird über die Fahrzeugverzögerung der mittlere Bremsdruck ermittelt und die Bremsdrücke und der Vordruck korrigiert. Die korrigierten Drücke sind Ausgangspunkte für neue Druckberechnungen.

**Patentansprüche**

**1.** Antiblockierregelsystem enthaltend Meßwertgeber zur Bestimmung der Radgeschwindigkeit, eine Auswerteschaltung, der diese Radgeschwindigkeitssignale zugeführt werden und die Bremsdrucksteuersignale erzeugt und Bremsdrucksteuereinrichtungen, die zur Variation des Bremsdrucks im Sinne einer Verhinderung des Radblockierens mit den Bremsdrucksteuersignalen angesteuert werden enthaltend weiterhin eine Einrichtung zur Bestimmung des augenblicklichen Bremsdrucks, wobei dieser Einrichtung die Bremsdrucksteuersignale zugeführt werden und in ihr die spezielle Hydraulik kennzeichnende Daten und Verläufe vorgegeben sind, dadurch gekennzeichnet, daß die Ermittlung des Radbrems-

4

drucks $p_R(t)$ gemäß den Beziehungen

$$p_R(t) = p_R(t_0) + \{p_V(t_0) - p_R(t_0)\} * [1-e^{-(t-t_0)/T_2}]$$

(für den Druckaufbau)

bzw. $$p_R(t) = p_R(t_0) - p_R(t_0) * [1-e^{-(t-t_0)/T_1}]$$

(für den Druckabbau)

erfolgt, wobei $t_0$ der Ausgangspunkt der Druckänderung (= Beginn der Regelung), $p_V(t_0)$ der Vordruck am Ausgangspunkt $t_0$ und $T_1$ und $T_2$ die fahrzeugspezifische Zeitkonstanten der Differentialgleichung für den Druckaufbau ($T_2$) und den Druckabbau ($T_1$) sind, daß der Vordruck $p_V(t_0)$ und der Bremsdruck $p_R(t_0)$ zu Beginn der Regelung aus der augenblicklichen Fahrzeugverzögerung $a_{FZ}$ und fahrzeugspezifischen Konstanten b, c und e abgeleitet werden, daß jeweils zu Beginn eines Regelzyklus aus der herrschenden Fahrzeugverzögerung $a_{FZ}$ ein dem mittleren Blockierdruck der Vorderachse entsprechender Druckwert $p_R^*$ gewonnen wird, und daß durch Vergleich dieses Druckwerts $p_R^*$ mit den gemittelten, berechneten Druckwerten $p_m$ der Vorderachse ein Korrekturfaktor k gewonnen wird, mit dem die berechneten Druckwerte $p_R(t)$ korrigiert werden.

**Claims**

1. Anti-lock brake system containing measurement pick-ups for determining the wheel speed, an analysis circuit to which these wheel speed signals are supplied and which generates brake pressure control signals, and brake pressure control devices which are activated by means of the brake pressure control signals in order to vary the brake pressure in the direction of preventing wheel lock, also containing a device for determining the instantaneous brake pressure, the brake pressure control signals being supplied to this device and data and curves characterizing the particular hydraulics being provided in it, characterized in that the determination of the wheel brake pressure $p_R(t)$ takes place in accordance with the relationships

$$p_R(t) = p_R(t_0) + \{p_V(t_0) - p_R(t_0)\} * [1-e^{-(t-t_0)/T_2}]$$

(for the pressure build-up)

$$and\ p_R(t) = p_R(t_0) - p_R(t_0) * [1-e^{-(t-t_0)/T_1}]$$

(for the pressure reduction)

where $t_0$ is the starting point for the change of pressure (=beginning of the control operation), $p_V(t_0)$ is the admission pressure at the starting point $t_0$ and $T_1$ and $T_2$ are the time constants (specific to the vehicle) of the differential equation for the pressure build-up ($T_2$) and the pressure reduction ($T_1$), that the admission pressure $p_V(t_0)$ and the brake pressure $p_R(t_0)$ are derived at the beginning of the control operation from the instantaneous vehicle deceleration $a_{FZ}$ and constants b, c and e specific to the vehicle, that at the beginning of each control cycle, a pressure value $p_R^*$ corresponding to the average lock-up pressure of the front axle is obtained from the prevailing vehicle deceleration $a_{FZ}$ and that a correction factor k, with which the calculated pressure values $p_R(t)$ are corrected, is obtained by comparison of this pressure value $p_R^*$ with the averaged, calculated pressure values $p_m$ of the front axle.

**Revendications**

1. Système de régulation d'antiblocage contenant des détecteurs de valeurs de mesure servant à détecter la vitesse des roues, un circuit d'exploitation auquel sont amenés les signaux des vitesses des roues et qui produit des signaux de commande des pressions de freinage qui sont déclenchées pour faire varier la pression de freinage dans un sens qui empêche le blocage de la roue par les signaux de commande de la pression de freinage, le système contenant en outre un dispositif servant à déterminer la pression de freinage instantanée, les signaux de commande de la pression de freinage étant amenés à ce dispositif et les données et évolutions caractéristiques spécifiques pour l'hydraulique du système étant

5

prédéfinies dans ce dispositif, système de régulation d'antiblocage caractérisé en ce que l'on effectue la détermination de la pression de freinage des roues $p_R(t)$ selon les relations suivantes :

$$p_R(t) = p_R(t_0) + \left\{ p_{av}(t_0) - p_R(t_0) \right\} \cdot \left[ 1 - e^{-(t-t_0)/T_2} \right]$$

pour la montée de la pression, ou

$$p_R(t) = p_R(t_0) - p_R(t_0) \cdot \left[ 1 - e^{-(t-t_0)/T_1} \right]$$

pour la chute de la pression,.

relations dans lesquelles $t_0$ est le point de départ de la variation de la pression (c'est-à-dire le début de la régulation), $p_V(t_0)$ est la pression d'alimentation au point de départ $t_0$, et $T_1$ et $T_2$ sont les constantes de temps, propres au véhicule, de l'équation différentielle pour la montée de la pression ($T_2$) et la chute de la pression ($T_1$), en ce que la pression d'alimentation $p_V(t_0)$ et la pression de freinage $p_R(t_0)$ sont prélevées au début de la régulation à partir de la décélération instantanée du véhicule $a_{FZ}$ et des constantes propres au véhicule b, c et e, en ce que respectivement au début d'un cycle de régulation, on obtient à partir de la décélération dominante du véhicule une valeur de la pression $p_R^*$ qui correspond à la pression moyenne de blocage de l'essieu avant, et en ce que par la comparaison de cette valeur de la pression $p_R^*$ avec les valeurs moyennes calculées de la pression $p_m$ de l'essieu avant, on obtient un coefficient de correction k avec lequel on corrige les valeurs calculées de la pression $p_R(t)$.

Fig.1

Fig.2

Fig.3